# NEUE EUROPÄISCHE PATENTSCHRIFT

(11) **EP 2 037 215 B2**
(45) Veröffentlichungstag und Bekanntmachung des Hinweises auf die Entscheidung über den Einspruch: **16.10.2019**
(45) Hinweis auf die Patenterteilung: 28.09.2016
(21) Anmeldenummer: 08020859.8
(22) Anmeldetag: 06.07.2001
(51) Int. Cl.: B05B 13/04, B05B 12/08, G01B 11/30, G01B 11/06

(54) **Verfahren und Kontrollsystem zur Kontrolle der Beschichtungsqualität von Werkstücken**
Method and control system to control the coating quality of workpieces
Procédé et système de contrôle destinés au contrôle de la qualité de revêtement de pièces usinées

(30) Priorität: 27.07.2000 DE 10036741
(43) Veröffentlichungstag der Anmeldung: 18.03.2009
(62) Teilanmeldung aus: 01116438.1
(73) Patentinhaber: Dürr Systems AG, 74321 Bietigheim-Bissingen (DE)
(72) Erfinder: Maxharraj, Bekim, verstorben (DE); Zabel, Michael, 71364 Winnenden (DE); Jost, Jürgen, 71679 Asperg (DE)
(74) Vertreter: Heusler, Wolfgang

(56) Entgegenhaltungen:
- WO-A-98/14778
- WO-A1-87/00629
- DE-A- 19 717 593
- DE-A1- 4 121 464
- DE-A1- 19 730 885
- DE-A1- 19 931 676
- DE-B4- 4 338 223
- JP-A- H01 104 366
- US-A- 4 629 319
- US-A- 4 702 931
- US-A- 4 989 981
- US-A- 5 175 601
- US-A- 5 293 218
- US-A- 5 331 169
- US-A- 5 379 347
- US-A- 5 477 268
- US-B1- 6 239 436
- US-B1- 6 266 138
- Hayk M.: "Online -Schichtdickenmessung bei Audi", JOT, vol. 1, 2000, pages 48-50, XP055388267,
- Pulver-Schichtdicken-Messgeräte genauer betrachtet: "Messen & Prufen", JTO, 1 January 2000 (2000-01-01), pages 28-30, XP055388270,
- Anonymous: "European Automotive Coating", 7th DFO Automotive-Conference, 24 May 2000 (2000-05-24), pages 53-65, XP055388276, ISBN: 3-932287-43-6

## Beschreibung

Die Erfindung betrifft ein Verfahren und ein Kontrollsystem zur Kontrolle der Beschichtungsqualität von Fahrzeugkarossen.

Für die Qualitätsprüfung beschichteter Oberflächen werden "Online"-Messsysteme verwendet, die schon während des Produktionsprozesses Beschichtungsfehler erkennen und deren Korrektur ermöglichen sollen. Typische Lackfehler wie z.B. Poren, Bläschen usw. oder flächige Fehler wie Orangenhaut oder Wolkenbildung bei Metallic-Lackierungen lassen sich durch Reflexionsmessung mit ortsfest an einem Messportal angeordneten oder von programmgesteuerten Robotern geführten Kameras feststellen (JOT 1997/3, S. 72-73). Die auf Lichtreflexion beruhende Lackfehlermessung liefert aber keine qualitativ genauen Messwerte bestimmter Beschichtungsparameter wie z.B. der Schichtdicke oder des Farbtons. Außerdem ist es schwierig, einer mit einer Kamera abgetasteten Fehlerstelle die genauen Koordinaten in einem Bezugssystem zuzuordnen, so daß es nicht einfach ist, die ermittelten Fehler durch Änderung des Beschichtungsprogramms zu korrigieren.

Aus der DE 197 17 593 A1 ist es auch bereits bekannt, zur "On-line"-Kontrolle serienweise beschichteter Fahrzeugkarossen deren Oberflächen mit einem an einem Roboter angebrachten Messkopf abzutasten, der mehrere unterschiedliche Messgeräte für Qualitätsparameter wie Welligkeitsverlauf, Farbton, Farbglanz und Schichtdicke enthält. Der Roboter soll eine Vielzahl von im Programm hinterlegten Messpunkten der Karosse anfahren, deren jeweilige Messdaten in einem Rechner gespeichert und dazu verwendet werden können, für jeden Messpunkt das Messergebnis in der Darstellung der Karosse auf einem Bildschirm z.B. durch Markierungen mit unterschiedlichen Farben anzuzeigen. Bei dem aus der DE 197 17 593 bekannten "Online"-Kontrollverfahren fehlte aber eine eindeutige Zuordnung zwischen den Messpunkten und den Messwerten. Es war deshalb schwierig, die Messwerte auf dem Bildschirm genau an den Messpunkten darzustellen und zu markieren. Auch die gewünschte Fehlerkorrektur im geschlossensen Regelkreis war schwierig.

WO 98 14 778 A offenbart ein Verfahren zur Vermessung von lackierten Prüftafeln, bei denen es sich z.B. um gekrümmte Teile von Fahrzeugkarossen handeln kann, und die z.B. von einem Labor-Roboter aus einem Aufgabemagazin entnommen, auf eine Messstation gelegt und schließlich in eine Ablagestation überführt werden. In der Messstation wird durch den Labor-Roboter mit verschiedenen Messgeräten eine Vermessung der verschiedenen Eigenschaften der Beschichtung durchgeführt, was ortsaufgelöst und elektronisch erfasst erfolgen soll. Die Prüftafeln enthalten einen aufgeklebten Barcode, aus dem mit einem Lesegerät die Positionen der Messpunkte ermittelt werden.

US-A-5 293 218 offenbart ein Verfahren zur Prüfung von Düsentreibstoff, der zu diesem Zweck über ein geheiztes Metallrohr geleitet wird, worauf der Verlauf der Dicke des sich bildenden Niederschlags mit einem automatisch über die Oberfläche bewegten Messgerät an vorbestimmten Messpunkten gemessen wird. Ein Rechner berechnet komplette Schichtdickenprofile auf der Zylindermantelfläche des Metallrohrs.

US-A-4 702 931 offenbart ein Verfahren zur Kontrolle der Beschichtungsqualität von automatisch lackierten Platten, bei dem die Dicke der noch nassen Lackschicht mit berührungslos über die Plattenoberfläche bewegten Messgeräten gemessen wird.

Dabei werden unter Steuerung eines Rechners unterschiedliche Messpunkte in einer definierten Spur angefahren.

Der Erfindung liegt die Aufgabe zugrunde, ein Verfahren und ein Kontrollsystem anzugeben, die qualitativ genaue Messung und eine genau reproduzierbare Zuordnung der Messwerte zu den Messorten ermöglichen.

Diese Aufgabe wird durch die in den Patentansprüchen angegebenen Merkmale gelöst.

An sich ist es bereits bekannt, in programmgesteuerten Beschichtungsanlagen für Fahrzeugkarossen Daten zu speichern, welche die Lage bestimmter Karossenpunkte in einem Referenzkoordinatensystem definieren (DE 198 04 400). Durch die Verknüpfung der Messdaten mit den Messpunktkoordinaten in der Datenbank wird aber nicht nur die Markierung von Beschichtungsfehlern beispielsweise auf einem Bildschirm, sondern auch die entsprechende Korrektur der für die Fehler verantwortlichen Beschichtungsparameter des für die Beschichtungsanlage vorgesehenen Beschichtungsprogramms wesentlich erleichtert und vereinfacht. Zur Korrektur von Beschichtungsfehlern an den Messpunkten können nämlich die gespeicherten Beschichtungsparameter aufgrund der ermittelten Koordinaten punktgenau und genau im qualitativ erforderlichen Maße geändert werden. Das Ergebnis ist eine generelle Verbesserung der Beschichtungsqualität.

Da der jeweils gemessene Punkt auf der Werkstückoberfläche aufgrund seiner Koordinaten eindeutig bestimmbar ist, können die gemessenen Qualitätsparameter ebenso eindeutig dem Beschichtungsprogramm zugeordnet werden. Dies wird dadurch ermöglicht, dass es sich bei den Koordinaten der Qualitätsparameter und bei denjenigen der im Beschichtungsprogramm enthaltenen Werkstückpunkte jeweils um Objektkoordinaten handelt, die denselben Bezugspunkt haben.

Wenn also eine Abweichung eines Qualitätsparameters von seinem Sollwert gemeldet wird, kann dieser Fehler dem Verursacher, also dem Sprüh- oder sonstigen Beschichtungsorgan für die betreffende Beschichtungsstelle des Werkstücks (z. B. einer lackierten Karosse) eindeutig zugeordnet werden. Diese Zuordnung wird dadurch gewährleistet, dass jedes Werkstück bei der Serienbeschichtung und bei der anschließenden Messung durch eine eigene Codenummer identifiziert ist. Zu jedem Werkstück können zum Zeitpunkt der Beschichtung in einer Datenbank alle etwaigen Fehler gespeichert werden (Sprühorgan ausgefallen, keine Farbe, Druckregler defekt, etc.) Ferner können alle an der Beschichtungsanlage vorgenommenen prozess-, verfahrens- und applikationstechnischen Änderungen in Form eines "Änderungsjournals" gespeichert werden. Zusätzlich zu den in der Prozessdatenbank bereits vorhandenen Sollwerten aller für die Beschichtung relevanten Parameter der Verfahrens-, Applikations- und Prozesstechnik können auch deren jeweilige Istwerte aufgenommen und gespeichert werden. Damit kann eine vollständige Korrelation zwischen der Messung der Qualitätsparameter und den Ereignissen im Beschichtungsprozess gewährleistet werden.

Darüber hinaus ergeben sich für die Erfindung zusätzliche Kontrollmöglichkeiten wie z. B. einfacher Vergleich aktueller Messergebnisse mit den Ergebnissen früherer Messungen an anderen, zuvor beschichteten Werkstücken, die Ermittlung und Darstellung von Entwicklungstrends bestimmter Fehler, der kontinuierliche Fehlerverlauf auf dem Werkstück usw. oder auch die lupenartige Untersuchung besonderer, schwierig zu beschichtender Problemzonen.

Anhand der Zeichnung wird die Erfindung näher erläutert. Es zeigen:
- Fig. 1: eine schematische Darstellung einer beschichteten Fahrzeugkarosse;
- Fig. 2: die dreidimensionale Darstellung der Karosse auf einem Bildschirm;
- Fig. 3: eine Fig. 1 entsprechende zu beschichtende Karosse; und
- Fig. 4: einen geschlossenen Prozessregelkreis für die Karossenbeschichtung.

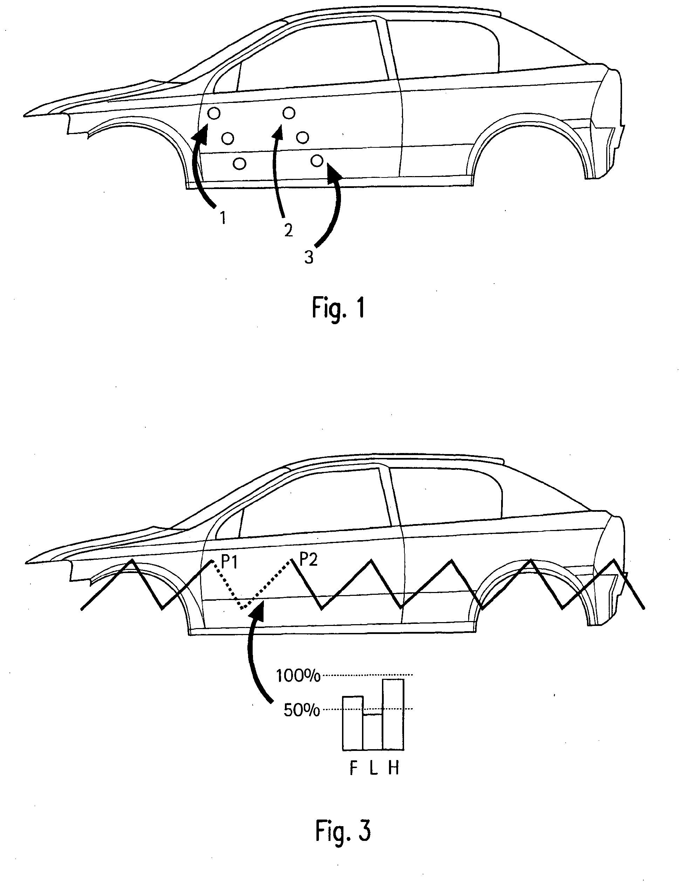

Es sei angenommen, daß die in Fig. 1 dargestellte Karosse im normalen Serienbeschichtungsbetrieb lackiert wurde und nun hinsichtlich der Beschichtungsqualität geprüft werden soll. Zu diesem Zweck wird von einem programmgesteuerten Roboter (oder sonstigen mehrachsigen Bewegungsautomaten) ein Messgerät über die beschichtete Oberfläche bewegt, mit dem an beliebig gewählten Punkten 1, 2, 3 ein für die Beschichtungsqualität relevanter Parameter gemessen wird. Bei dem betrachteten Beispiel ist insbesondere die Schichtdicke wichtig, mit der auch verschiedene sonstige Eigenschaften der Lackschicht zusammenhängen. Geeignete Geräte zur vorzugsweise berührungslosen Messung der Schichtdicke sind an sich bekannt, z.B. mit Lasern arbeitende Messköpfe zur Messung des Naßlacks. Die Qualitätsmessung kann generell sowohl als Naßmessung als auch als Trockenmessung erfolgen, vorzugsweise im Online-Betrieb unmittelbar an der Lackierstraße hinter den Beschichtungsmaschinen.

Anstelle oder zusätzlich zu der Schichtdicke können auch andere für die Qualität relevante Parameter wie Farbton und/oder Oberflächenverlauf beispielsweise in der aus der DE 197 17 593 A1 an sich bekannten Weise gemessen werden.

Während der Messungen können die Ortskoordinaten X, Y, Z der von dem Roboter angefahrenen Messpunkte in einem dreidimensionalen kartesischen Bezugskoordinatensystem aufgrund der bezüglich der Karosse definierten Roboterbewegungen selbsttätig ermittelt werden. Zugleich werden für jede Messung die Messwinkel A, B, C als "Koordinaten" der Schwenkbewegung oder Drehstellung des Messgerätes um die X-, Y- und Z-Achsen des Koordinatensystems festgestellt, um auch in dieser Hinsicht definierte Messergebnisse zu erhalten. Dadurch können u.a. Abweichungen der Messung von der in der Regel gewünschten 90°-Stellung festgestellt und korrigiert oder bei der Auswertung berücksichtigt werden.

Es ergibt sich also eine eindeutige Zuordnung und Verknüpfung zwischen den Messwerten wie Schichtdicke, Farbton oder Verlauf und den Koordinaten X, Y, Z, A, B, C der jeweils nach Bedarf oder beispielsweise nach einem vorgegebenen Steuerprogramm gewählten Messpunkte gemäß Fig. 1. Die gemessenen Werte werden der Systemsteuerung übermittelt, die ihnen die zugehörigen Koordinaten hinzufügt und diese Daten gemeinsam in einer Datenbank speichert. Die Zuordnung ist zweckmäßig mit Hilfe des Steuerprogramms des Messroboters realisierbar, dessen Positionen bezüglich der Karosse in der an sich üblichen Weise in Form von Koordinaten gespeichert werden. Ein entsprechendes Koordinatensystem kann dem Bewegungsprogramm der Beschichtungsmaschinen zugrundegelegt werden, bei denen es sich um konventionelle Seiten- und Dachmaschinen oder auch um Roboter handeln kann.

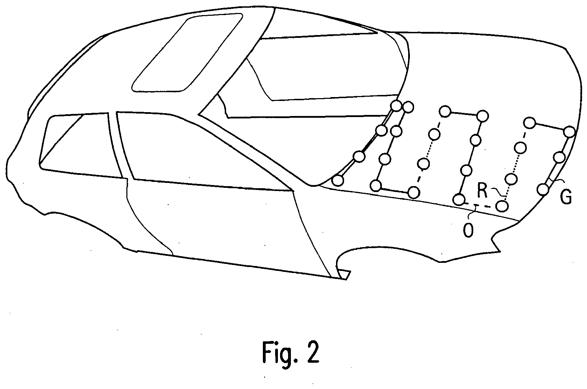

Mit den gespeicherten Mess- und Koordinatendaten ist es zunächst möglich, beispielsweise in einem dreidimensionalen Bild der Karosse gemäß Fig. 2 auf einem Rechnerbildschirm die gewählten Messpunkte sichtbar darzustellen. Es ist vorgesehen, in dieser Darstellung ständig oder auf Anforderung neben einzelnen oder allen Messpunkten jeweils deren Koordinaten und/oder die Schichtdicken- oder sonstigen Messwerte anzuzeigen. Besonders vorteilhaft für die Beurteilung der Beschichtungsqualität kann es ferner sein, in dem Karossenbild die einzelnen gemessenen Schichtdickenwerte zwischen aufeinanderfolgenden Messpunkten zu Linien oder Flächen zu interpolieren und diese je nach Übereinstimmung oder Abweichung von Sollwerten farblich unterschiedlich darzustellen, um bei Schwankungen der Schichtdicke oder sonstigen gemessenen Parameter den jeweiligen örtlichen Trend anzuzeigen. Je nach der gemessenen Schichtdicke ändert sich also die Farbe der zwischen den einzelnen Messpunkten auf dem Bildschirm dargestellten Linien. Beispielsweise können die in Fig. 2 durchgehenden Linien G grün für "in Ordnung" dargestellt werden, die gestrichelten Linien O orange für "Grenzbereich" und die gepunkteten Linien R rot für "falsch", so daß der Trend von einwandfreien Stellen bis hin zu fehlerhaften Stellen gut zu erkennen ist.

Eine weitere Möglichkeit besteht darin, daß auf dem Bildschirm vorzugsweise gleichzeitig mit den bei der jeweiligen Messung gespeicherten aktuellen Messergebnissen auch frühere Messergebnisse dargestellt werden, die zuvor bei der Vermessung einer anderen, früher beschichteten Karosse gespeichert worden waren. Dadurch können auch zeitliche Trends und Beschichtungsänderungen im laufenden Beschichtungsbetrieb erkannt werden, wie sie beispielsweise durch Maschinenfehler, Justierungsänderungen, Änderungen der Umgebungsbedingungen wie Temperatur oder Feuchtigkeit, neues Lackmaterial usw. verursacht werden können.

Ferner kann zur Kontrolle schwierig zu beschichtender Problemzonen der Karossenoberfläche ein besonderes Messprogramm vorgesehen sein, nach dem nur die Problemzone mit dem Messgerät abgetastet wird. Die mit Unterstützung durch eine Prozessdatenbank gezielt und problemspezifisch automatisch angefahrene Problemzone kann wie mit einer Lupe eingekreist und mit einem speziellen Messprogramm mit den erforderlichen Messtools und Messparametern analysiert werden.

Auch der eigentliche Zweck der hier beschriebenen Qualitätskontrolle, nämlich die Korrektur festgestellter Beschichtungsfehler etwa bei der Beschichtung nachfolgender Karossen, ist aufgrund der eindeutigen und genauen Korrelation zwischen den Messwerten und den Koordinaten der jeweiligen Messpunkte und folglich auch den Prozessparametern (Farbmenge, Lenkluft, Hochspannung usw.) des Beschichtungsprogramms, die in üblicher Weise ebenfalls punktweise gespeichert werden können, einfach realisierbar. Entsprechendes gilt für die Korrektur von Fehlern an dem vermessenen Werkstück selbst.

Fig. 3 zeigt eine typische Beschichtungsbahn, wie sie beim Lackieren einer Karosse erzeugt wird, während diese an einem auf und ab bewegten Zerstäuber vorbeigefahren wird. Da die Prozessparameter, die beispielsweise bei der Beschichtung an den Messpunkten 1 und 2 gemäß Fig. 1 eingestellt waren, aufgrund ihrer mit den Messwerten gespeicherten Koordinaten eindeutig auffindbar sind, können sie an den Stellen der entsprechenden Punkte P1 und P2 der Beschichtungsbahn bei der Beschichtung nachfolgender Karossen erforderlichenfalls problemlos und unter Berücksichtigung der qualitativ gespeicherten Messergebnisse korrigiert werden. Die Stellgrößen für den Beschichtungsprozess können hierbei mit Hilfe einer Korrelationsanalyse in der erforderlichen Weise geändert werden. Gemäß der Darstellung in Fig. 3 werden in der betrachteten Strecke von P1 nach P2 die Farbmenge F, die Lenkluft L und die Hochspannung H auf die prozentual richtigen Werte eingestellt.

Die Parameterkorrektur erfolgt durch das Bedienungspersonal der Beschichtungsanlage oder auch selbsttätig im geschlossenen Prozessregelkreis. Bei der automatischen Korrektur können die Messwerte mit für jeden Messpunkt gespeicherten Sollwerten z.B. der Schichtdicke verglichen und etwaigen Abweichungen entsprechende Daten oder Signale für die Korrektur des gespeicherten Beschichtungsprogramms erzeugt werden.

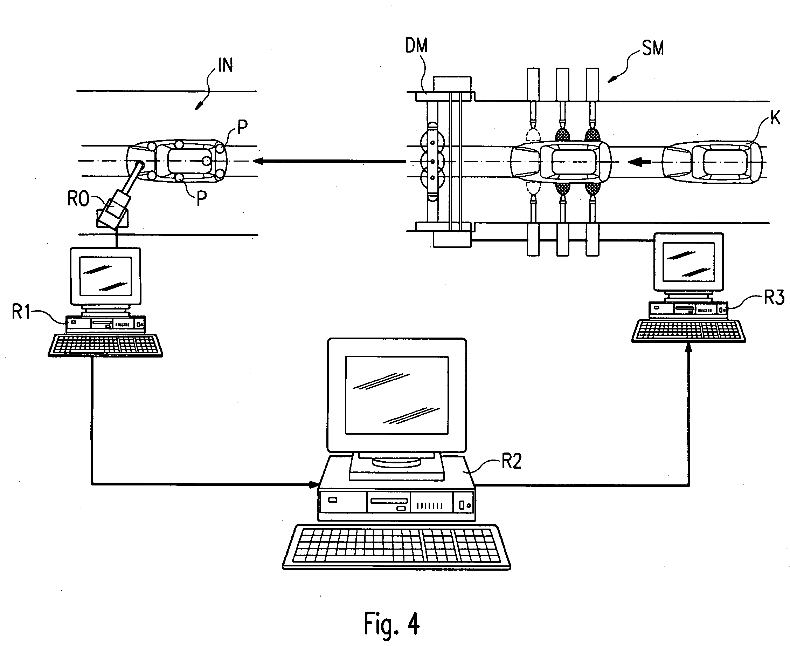

Ein geschlossener Prozessregelkreis ist in Fig. 4 dargestellt. Demgemäß werden die Karossen K in der üblichen Weise beispielsweise von Seitenmaschinen SM und einer Dachmaschine DM (oder stattdessen von Robotern) lackiert und anschließend in einen Inspektionsbereich IN gefördert, wo von einem Roboter RO mit einem Messkopf in der beschriebenen Weise an ausgewählten Stellen oder Messpunkten P beispielsweise die Schichtdicke gemessen wird. Die Messergebnisse werden von einem den Roboter RO steuernden Messrechner R1 selbsttätig verarbeitet und ausgewertet und anschließend an einen Prozessrechner R2 übergeben. Der Prozessrechner R2 verfügt über die Datenbank zur Speicherung der Messergebnisse gemeinsam mit den Koordinaten der Messpunkte. Der Prozessrechner kann auch die erwähnte Interpolation durchführen und die farblich markierten Ergebnisse gemäß Fig. 2 auf seinem Bildschirm anzeigen.

Aufgrund ermittelter Qualitätsfehler veranlaßt der Prozessrechner R2 dann einen Steuerrechner R3, die nachfolgenden Karossen K mit den in der erforderlichen Weise korrigierten Prozessparametern zu beschichten.

## Patentansprüche

1. Verfahren zur Kontrolle der Beschichtungsqualität von serienweise automatisch mit einem Applikationsorgan gemäß Prozessparametern eines gespeicherten Beschichtungsprogramms beschichteten Fahrzeugkarossen (K), wobei
mindestens ein Messgerät zur Messung mindestens eines Qualitätsparameters der Schicht selbsttätig von einem Roboter (RO) oder Bewegungsautomaten über die beschichtete Oberfläche der im Serienbeschichtungsbetrieb beschichteten Fahrzeugkarosse bewegt wird und an vorbestimmten Messpunkten den Parameter misst und die Messwerte in einer Datenbank gespeichert werden;
während der Messungen die Koordinaten der Messpunkte in einem die beschichtete Oberfläche definierenden und auf die Bewegung des Messgerätes bezogenen Koordinatensystem aufgrund der bezüglich der Fahrzeugkarosse definierten Roboterbewegungen selbsttätig ermittelt werden;
die ermittelten Koordinaten der Messpunkte in der Datenbank zusammen mit den an den jeweiligen Punkten gemessenen Werten gespeichert und ihnen zugeordnet werden; und
mindestens ein Teil der beschichteten Fahrzeugkarosse (K) auf einem Bildschirm dargestellt wird, wobei in dem Karossenbild auf dem Bildschirm die Koordinaten der Messpunkte dargestellt werden,
wobei die Messwerte mit für jeden Messpunkt gespeicherten Sollwerten verglichen und Abweichungen entsprechende Daten oder Signale erzeugt werden,
wobei in dem Karossenbild Änderungen des gemessenen Parameters zwischen aufeinanderfolgenden Messpunkten markiert werden,
wobei die Änderungen durch die Messpunkte verbindende Linien oder Flächen markiert werden, wobei die Linien oder Flächen in entsprechend den Änderungen der Parameter unterschiedlichen Farben dargestellt werden.

2. Verfahren nach Anspruch 1, wobei mit den Koordinaten der Messpunkte die jeweilige Schwenkstellung (A, B, C) des Messgerätes um die Achsen (X, Y, Z) des Koordinatensystems in der Datenbank gespeichert wird.

3. Verfahren nach Anspruch 1 oder 2, wobei die Schichtdicke gemessen wird.

4. Verfahren nach einem der vorangehenden Ansprüche, wobei die Karosse auf dem Bildschirm als dreidimensionale Graphik dargestellt wird.

5. Verfahren nach einem der vorhergehenden Ansprüche, wobei die Koordinaten (X, Y, Z) des Messorts in einem dreidimensionalen karthesischen Koordinatensystem und daneben die Schwenkwinkel (A, B, C), die die Schwenkstellung des Messgerätes oder des Applikationsorgans um die Achsen (X, Y, Z) des Koordinatensystems an dem Messort definieren, dargestellt werden.

6. Verfahren nach einem der vorangehenden Ansprüche, wobei Schichtdicke, Farbton und/oder Oberflächenverlauf der Karossen (K) gemessen werden, während diese nach der Beschichtung serienweise durch einen Inspektionsbereich gefördert werden.

7. Verfahren nach einem der vorangehenden Ansprüche, wobei auf dem Bildschirm gleichzeitig die bei der Messung gespeicherten aktuellen Messergebnisse und frühere Messergebnisse, die zuvor bei einer anderen Karosse (K) gespeichert worden waren, dargestellt werden.

8. Verfahren nach einem der vorangehenden Ansprüche, wobei zur Kontrolle schwierig zu beschichtender Problemzonen der Karossenoberfläche ein besonderes Messprogramm vorgesehen ist, nach dem nur die Problemzone mit dem Messgerät abgetastet wird.

9. Kontrollsystem, das zur Ausführung des Verfahrens nach einem der Ansprüche 1-8 ausgebildet ist,
mit einem programmgesteuerten Roboter (RO) oder mehrachsigen Bewegungsautomaten, an dem mindestens ein Messgerät zur Messung mindestens eines Qualitätsparameters der Schicht an vorbestimmten Messpunkten über die Oberfläche der Fahrzeugkarosse bewegbar montiert ist,
mit einer Datenbank zur Speicherung der Messwerte,
mit einem Programm, das die Lage eines Bildes der Fahrzeugkarosse in einem Referenzkoordinatensystem definiert;
und mit einem Prozessrechner (R2), der die Messwerte in der Datenbank mit den Koordinaten der Messpunkte in dem Referenzkoordinatensystem verknüpft;
wobei mindestens ein Teil der beschichteten Fahrzeugkarosse auf einem Bildschirm des Prozessrechners (R2) dargestellt wird.

10. Kontrollsystem nach Anspruch 9, wobei die Messwerte der einzelnen Messpunkte in der Datenbank zusammen mit den Koordinaten (X, Y, Z) der Messpunkte in einem kartesischen Koordinatensystem und mit den Winkeln (A, B, C) der Messrichtung bezüglich der Koordinaten gespeichert sind.

## Claims

1. Method of monitoring the coating quality of vehicle bodies (K) which are serially coated automatically by an applicator device according to process parameters of a stored coating program, wherein
at least one measuring device for measuring at least one quality parameter of the layer is moved automatically by a robot (RO) or automatic moving device over the coated surface of the vehicle body coated in the serial coating operation and at predetermined measurement points measures the parameter, and the measured values are stored in a database;
during the measurements the co-ordinates of the measurement points are automatically determined in a co-ordinate system defining the coated surface and relating to the movement of the measuring device based on the robot movements defined relative to the vehicle body;
the determined co-ordinates of the measurement points are stored in the database together with the values measured at the respective points and are assigned thereto; and
at least a part of the coated vehicle body (K) is displayed on a screen, wherein in the image of the vehicle body the co-ordinates of the measurement points are displayed on the screen,
wherein the measured values are compared with desired values stored for each measurement point and data or signals corresponding to deviations are generated,
wherein changes to the measured parameter between successive measurement points are marked in the image of the vehicle body,
wherein the changes are marked by lines or areas connecting the measurement points.
wherein the lines or areas are displayed in different colours corresponding to the changes in the parameters.

2. Method as claimed in claim 1, wherein with the co-ordinates of the measurement points the respective pivoted position (A, B, C) of the measuring device about the axes (X, Y, Z) of the system of co-ordinates is stored in the database.

3. Method as claimed in claim 1 or 2, wherein the coating thickness is measured.

4. Method as claimed in any one of the preceding claims, wherein the vehicle body is displayed on the screen as a three-dimensional graphic.

5. Method according to one of the preceding claims, wherein the co-ordinates (X, Y, Z) of the measurement location are displayed in a three-dimensional cartesian system of co-ordinates and aside the pivot angles (A, B, C) which define the pivoted position of the measuring device or of the applicator device about the axes (X, Y, Z) of the system of co-ordinates at the measurement location are displayed.

6. Method as claimed in any one of the preceding claims, wherein the coating thickness, colour and/or surface configuration of the vehicle bodies (K) are measured when after the coating vehicle bodies are conveyed serially through an inspection region.

7. Method as claimed in any one of the preceding claims, wherein the current measurement results stored with the measurement and earlier measurement results which had been stored previously in relation to a different vehicle body (K) are simultaneously displayed on the screen.

8. Method as claimed in any one of the preceding claims, wherein for monitoring of problem zones of the vehicle body surface which are difficult to coat a special measuring program is provided according to which only the problem zone is scanned by the measuring device.

9. Monitoring system which is designed for carrying out the method as claimed in any one of claims 1 - 8,
with a program-controlled robot (RO) or multi-axial automatic moving device on which there is movably mounted at least one measuring device for measuring at least one quality parameter of the coating at predetermined measurement points over the surface of the vehicle body;
with a database for storage of the measured values;
with a program which defines the position of an image of the vehicle body in a system of reference co-ordinates;
and with a process computer (R2) which links the measured values in the database with the co-ordinates of the measurement points in the system of reference co-ordinates,
wherein at least a part of the coated vehicle body is displayed on a screen of the process computer (R2).

10. Monitoring system as claimed in claim 9, wherein the measured values of the individual measurement points are stored in the database together with the co-ordinates (X, Y, Z) of the measurement points in a cartesian system of co-ordinates and with the angles (A, B, C) of the measuring direction with respect to the co-ordinates.

## Revendications

1. Procédé de contrôle de la qualité de revêtement d'une carrosserie de véhicule (K) revêtue de manière automatique, en série, avec un dispositif d'application, selon des paramètres de processus d'un programme de revêtement enregistré, dans lequel au moins un appareil de mesure est déplacé automatiquement par un robot (RO) ou par un automate de déplacement, pour la mesure d'au moins un paramètre de qualité du revêtement, au-dessus de la surface revêtue de la carrosserie de véhicule revêtue à l'aide d'un revêtement en série, et mesure le paramètre en des points de mesure prédéterminés, et enregistre les valeurs de mesure dans une base de données ;
pendant les mesures, les coordonnées des points de mesure sont déterminées automatiquement dans un système de coordonnées définissant la surface revêtue et lié au mouvement de l'appareil de mesure à partir des mouvements du robot définis relativement à la carrosserie de véhicule,
les coordonnées déterminées des points de mesure sont enregistrées dans la base de données ensemble avec les valeurs mesurées au niveau des différents points et leur sont assignées ; et
au moins une partie de la carrosserie de véhicule revêtue (K) est représentée sur un écran,
les coordonnées des points de mesure étant représentées dans l'image de la carrosserie sur l'écran,
les valeurs de mesure étant comparées avec les valeurs de consigne enregistrées pour chaque point de mesure et des données ou signaux correspondants étant générés à partir des écarts,
les variations du paramètre mesuré entre des points de mesures successifs étant marquées sur l'image de la carrosserie,
les variations étant marquées par des lignes ou des surfaces reliant les points de mesure,
les lignes ou surfaces étant représentées avec des couleurs différentes selon les variations des paramètres.

2. Procédé selon la revendication 1, la position de pivotement (A, B, C) correspondante de l'appareil de mesure autour des axes (X, Y Z) étant enregistrée dans la base de données avec les coordonnées des points de mesure.

3. Procédé selon la revendication 1 ou 2, l'épaisseur de couche étant mesurée.

4. Procédé selon l'une des revendications précédentes, la carrosserie étant représente sur l'écran sous la forme d'un graphique tridimensionnel.

5. Procédé selon l'une des revendications précédentes, les coordonnées (X, Y, Z) du lieu de mesure étant représentées dans un système de coordonnées cartésien tridimensionnel et, à côté, les angles de pivotement (A, B, C), qui définissent la position de pivotement de l'appareil de mesure ou du dispositif d'application autour des axes (X, Y, Z) du système de coordonnées au niveau du lieu de mesure, sont représentés.

6. Procédé selon l'une des revendications précédentes, l'épaisseur de couche, la couleur et/ou la forme de la surface de la carrosserie (K) sont mesurées, pendant que celle-ci est convoyée en série à travers une zone d'inspection après le revêtement.

7. Procédé selon l'une des revendications précédentes, les résultats de mesure actuels enregistrés lors de la mesure et les résultats de mesure antérieurs, qui ont été précédemment enregistrés pour une autre carrosserie (K), étant représentés simultanément sur l'écran.

8. Procédé selon l'une des revendications précédentes, un programme de mesure particulier étant prévu pour le contrôle de zones à problèmes difficiles à revêtir de la surface de la carrosserie, selon lequel seule la zone à problèmes est balayée par l'appareil de mesure.

9. Système de contrôle qui est conçu pour l'exécution du procédé selon l'une des revendications 1 à 8, avec un robot programmable (RO) ou un automate de déplacement multi-axe, sur lequel est monté au moins un appareil de mesure pour la mesure d'au moins un paramètre de qualité de la couche au niveau de points de mesure prédéterminés au-dessus de la carrosserie de véhicule ;
avec une base de données pour l'enregistrement des valeurs de mesure ;
avec un programme qui définit la position d'une image de la carrosserie de véhicule dans un système de coordonnées de référence ;
et avec un ordinateur de processus (R2) qui met en correspondance les valeurs de mesure de la base de données avec les coordonnées des points de mesure dans le système de coordonnées de référence,
au moins une partie de la carrosserie de véhicule revêtue étant représentée sur un écran de l'ordinateur de processus (R2).

10. Système de contrôle selon la revendication 9, les valeurs de mesure des différents points de mesure étant enregistrées dans la base de données ensemble avec les coordonnées (X, Y, Z) des points de mesure dans un système de coordonnées cartésien et avec les angles (A, B, C) de la direction de mesure par rapport aux coordonnées.
